# EUROPÄISCHE PATENTSCHRIFT

(11) **EP 1 563 469 B1**
(45) Veröffentlichungstag und Bekanntmachung des Hinweises auf die Patenterteilung: **22.11.2006**
(21) Anmeldenummer: 03711698.5
(22) Anmeldetag: 20.03.2003
(51) Int. Cl.: G07F 19/00, H04M 15/00, G07F 17/16

(54) **VERFAHREN FÜR BARGELDLOSES BEZAHLEN IN COMPUTERNETZWERKEN ÜBER TELEFON**
METHOD FOR CONDUCTING CASHLESS PAYMENTS IN COMPUTER NETWORKS VIA TELEPHONE
PROCEDE POUR LE PAIEMENT SANS ARGENT LIQUIDE DANS DES RESEAUX D'ORDINATEURS PAR L'INTERMEDIAIRE DU TELEPHONE

(30) Priorität: 25.03.2002 AT 4612002
(43) Veröffentlichungstag der Anmeldung: 17.08.2005
(73) Patentinhaber: Krapfl, Peter, 1170 Wien (AT)
(72) Erfinder: Krapfl, Peter, 1170 Wien (AT)
(74) Vertreter: Grabherr, Claudia
(86) Internationale Anmeldenummer: PCT/AT2003/000080
(87) Internationale Veröffentlichungsnummer: WO 2003/081543

(56) Entgegenhaltungen:
- EP-A- 1 158 471
- EP-A- 1 164 749
- WO-A-02/073555
- US-A- 5 737 414
- US-A- 5 864 610
- US-A- 5 905 736
- US-A- 6 023 502

## Beschreibung

### Einführung:

Die Erfindung betrifft ein Verfahren zur einfachen, bargeldlosen Bezahlung von Beträgen die bei einem Bezug einer Leistung über Computernetzwerke anfallen. Die Abrechnung dieser Beträge erfolgt mittels vergebührter Telefonnummern. Leistungen in Computernetzwerken müssen gesondert bezahlt werden. Hierzu können gehören zum Beispiel das Herunterladen von Musikdateien über Computemetzwerke, Hilfs- und Auskunftsfunktionen, die Lieferung von Waren, Beratungsleistungen oder Ähnliches.

Der Leistungskonsument, der in ein Computernetzwerk geht, bleibt normalerweise weitgehend anonym. Der Leistungsanbieter hat keinerlei Möglichkeit, den Weg zum Teilnehmer zu verfolgen oder den Teilnehmer irgendwie wirtschaftlich vertretbar zu identifizieren. Durch die Erfindung soll die genaue Bezahlung einer beliebige Summe ohne einen Abbruch der bestehenden Netzwerkverbindung oder eine Anwahl eines anderen Computernetzwerkes über eine vergebührte Telefonnummer und ohne die Installation auf dem Computer des Leistungskonsumenten möglich sein.

### Bisheriger Stand der Technik:

Es sind bisher folgende Verfahren zur bargeldlosen Bezahlung in Computernetzwerken bekannt:

### Kreditkarten:

Dieses Bezahlsystem zeichnet sich dadurch aus, das dem Anbieter einer Leistung die Daten der Kreditkarte übermittelt werden müssen, um eine Leistung in Anspruch nehmen zu können. Da der Name, die Nummer und das Ablaufdatum übertragen werden, lehnen viele Menschen diese Möglichkeit der Bezahlung ab. Des Weiteren verfügen nicht alle Menschen über Kreditkarten.

### Bezahlung über kostenpflichtige Telefonnummern:

Bei diesen Bezahlsystemen wird der Kunde aufgefordert eine Telefonnummer anzurufen, die Verbindung eine bestimmte Zeit zu halten und erhält nach dem Verstreichen dieses Zeitraumes einen Code, den er auf dem Computer des Leistungsanbieter eingeben muss.

Dieses System hat jedoch den Nachteil, dass wenn z.B. die Leitung vorzeitig abbricht (z.B. Störungen wie sie vom GSM Netz her bekannt sind), der Benutzer bezahlt hat, ohne eine Leistung zu erhalten. Außerdem ist es ein Problem, dass die Ansage des Codes, der im Endeffekt die Bezahlung der Leistung ermöglicht, schlecht verständlich sein kann und es vor allem ältern Menschen erhebliche Probleme bereitet, sich länger Codesequenzen unter Zeitdruck zu merken oder aufzuschreiben. Des weiteren ist eine genaue Abrechnung der Beträge nicht möglich. Wenn der Code beim ersten mal nicht verstanden wurde und der Code wiederholt werden muss, verlängert sich dadurch der Anruf und der bezahlte Betrag steigt dadurch an.

### Bezahlung über Vorausbezahlungs-Systeme:

Diese Systeme setzen z.B. Karten ein (sogenannte Prepaid-Karten), die über ein Vertriebssystem (z.B. Trafiken) erworben werden können. Diese Karten weisen einen bestimmten Nennwert auf. Man kann damit Leistungen bis max. der Höhe diese Nennwertes konsumieren. Diese Karten haben den Nachteil, das man Sie zuvor erwerben muss, und das bei Nichtverbrauchens eines Teilwertes dieser Karten immer Beträge offen bleiben. Bei einer Karte im Wert von z.B. 25 €, von der 23 abgebucht worden sind, bleiben 2 € offen. Der Kunde muss nun entweder eine Leistung im Wert von 2€ konsumieren, oder eine neue Karte anschaffen.

### Bezahlung über Programme, die automatisch kostenpflichtige Telefonnummern anwählen:

Bei diesen Bezahlsystemen wird der Kunde aufgefordert ein Programm auf seinem System zu installieren, das eine kostenpflichtige Telefonnummer anwählt (sogenannter "Dialer").

Der Benutzer hat oft keine Kontrolle über den Verbindungsaufbau und über die Dauer der Verbindung.

Bei diesem System wird oft das technische Unvermögen des durchschnittlichen Computerbenutzers ausgenützt, der sich dieses Programm installiert und danach z.B. vergisst, die Verbindung wieder abzubrechen. Dadurch entstehen oft enorme Kosten.

### Bezahlung mittels Überweisung:

Bei diesen Bezahlsystemen wird der Kunde aufgefordert ein Überweisung auf ein bestimmtes Bankkonto zu veranlassen. Durch die Verzögerung und die Kosten, die sich insbesondere bei Auslandsüberweisungen ergeben, ist diese Zahlungsmöglichkeit in Computernetzwerken nicht sehr verbreitet.

Die US 5 864 610 A zeigt ein Bezahlenverfahren in Computemetzwerken, bei dem der Nutzer eine ihm mitgeteilte, gebührenpflichtige Nummer wählt. Dieser Anruf wird vom Computersystem mit einer für den Nutzer mittels eines anderen Netzwerkes zu erbringenden Dienstleistung assoziiert, die hierzu fälligen Nutzungsgebühren werden dabei über die Telefongebühren des Nutzers abgerechnet.

### Beschreibung der Erfindung:

Erfindungsgemäß wird die Aufgabe durch ein Verfahren zur Verrechnung von Leistungen mit den Merkmalen des Patentanspruchs 1 gelöst.

Dies wird gemäss der Erfindung dadurch erreicht, das der Leistungskonsument eine Identifikationsnummer erhält. Diese kann der Leistungskonsument vom Leistungsanbieter direkt oder von einer dritten Stelle, z.B. einer Autorisierungsstelle, die mit dem Leistungsanbieter zusammenarbeitet, erhalten. Der Leistungskonsument kann die Identifikationsnummer zum Beispiel durch die Anzeige auf seinem Bildschirm, per Post, oder auf einem sonstigen Übertragungswege erhalten. Diese Identifikationsnummer identifiziert den Leistungskonsumenten gegenüber dem Leistungsanbieter und den Leistungsanbieter gegenüber dem Bezahlsystem.

Der Leistungsanbieter teilt dem Leistungskonsument außerdem die Telefonnummer des Bezahlsystems mit.

Auf dem Bezahlsystem sind die Identifikationsnummern zu diesem Zeitpunkt nicht gespeichert.

Die Identifikationsnummer setzt sich aus einem Teil zusammen, den der Leistungsanbieter vom Bezahlsystembetreiber erhält, und aus einem frei zu vergebenden Teil. Eventuell kann die Identifikationsnummer noch zusätzliche Sicherheitsmerkmale wie z.B. Prüfziffern enthalten.

Der Leistungskonsument wählt die Telefonnummer des Bezahlsystems, autorisiert sich dort mittels seiner Identifikationsnummer.

Das Bezahlsystem stellt mithilfe der aus der Identifikationsnummer gewonnen Daten (dem Teil, der dem Leistungsanbieters zuvor zugewiesen worden ist) Verbindung mit dem System des Leistungsanbieter her, überprüft die Identifikationsnummer auf deren Gültigkeit und fordert dort den zu bezahlenden Betrag an, oder lässt den Leistungskonsumenten einen Betrag seiner Wahl eingeben.

Aufgrund der Kosten der Verbindung, der bis zu diesem Zeitpunkt angefallenen Verbindungsdauer berechnet das Bezahlsystem die zu verbleibende Verbindungsdauer. Nach dem gesamten Verstreichen der zuvor berechneten Verbindungsdauer trennt das System die Verbindung und übermittelt den Betrag, der sich aus der Dauer der Verbindung und den Kosten die die vom Leistungskonsument gewählte Leitung aufweist berechnet, an den Server des Leistungsanbieters zurück.

Der Leistungsanbieter kann nun feststellen, ob der Betrag vollkommen bezahlt wurde, oder ob nur ein Teilbetrag bezahlt wurde (z.B. durch Abbruch der Verbindung).

Dadurch kann der Leistungsanbieter entsprechend reagieren und zum Beispiel die Leistung freigeben, oder den Teil der Leistung freizugeben, der der Höhe des verrechneten Betrages entspricht, oder den Leistungskonsumenten auffordern, den verbliebenen Teilbetrag zu bezahlen.

Nachdem Konsumieren einer Leistung kann die Identifikationsnummer wieder freigegeben werden und für eine neuerliche Transaktion verwendet werden.

### Vorteile der Erfindung:

Die Erfindung weist folgende Vorteile auf:
Der Leistungskonsumenten hat eine sofortige Möglichkeit der Bezahlung.
Der Leistungsanbieter kann dadurch dem Leistungskonsumenten die Leistung sofort zugänglich machen.
Der Leistungskonsument kann gegenüber dem Leistungsanbieter und dem Bezahlsystem anonym bleiben.
Der Leistungskonsument konsumiert seine Leistung nur über die Identifikationsnummer, und nach erfolgter Konsumierung kann diese wieder einem neuen Konsumenten zugewiesen werden.
Es werden keine persönlichen Daten übertragen.
Der Betrag wird genau abgerechnet.
Der Leistungskonsument kann jedes Telefon oder eine telefonähnliche Einrichtung zur Zahlung benutzen, ohne sich vorher bei irgendjemanden anmelden oder registrieren zu müssen.
Der Leistungskonsument kann ohne seine Zustimmung nicht nochmals belastet werden, wie es zum Beispiel bei einer Kreditkarte passieren kann.
Das Bezahlsystem übermittelt keinerlei Nummern oder ähnliches zurück an den Leistungskonsumenten, der diese über die Telefonleitung schlecht verstehen könnte, was danach Probleme bei der Autorisierung gegenüber dem Leistungsanbieter auslösen würde.

### Beispiel:

Ein Ausführungsbeispiel der Erfindung wird im folgenden und Anhand der beigefügten Abbildungen näher erläutert:

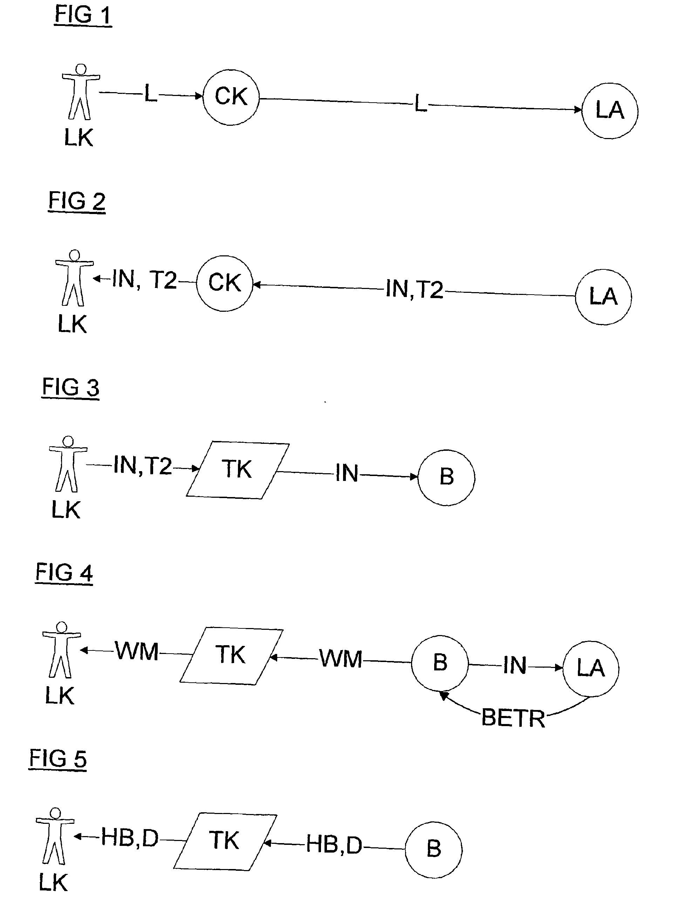

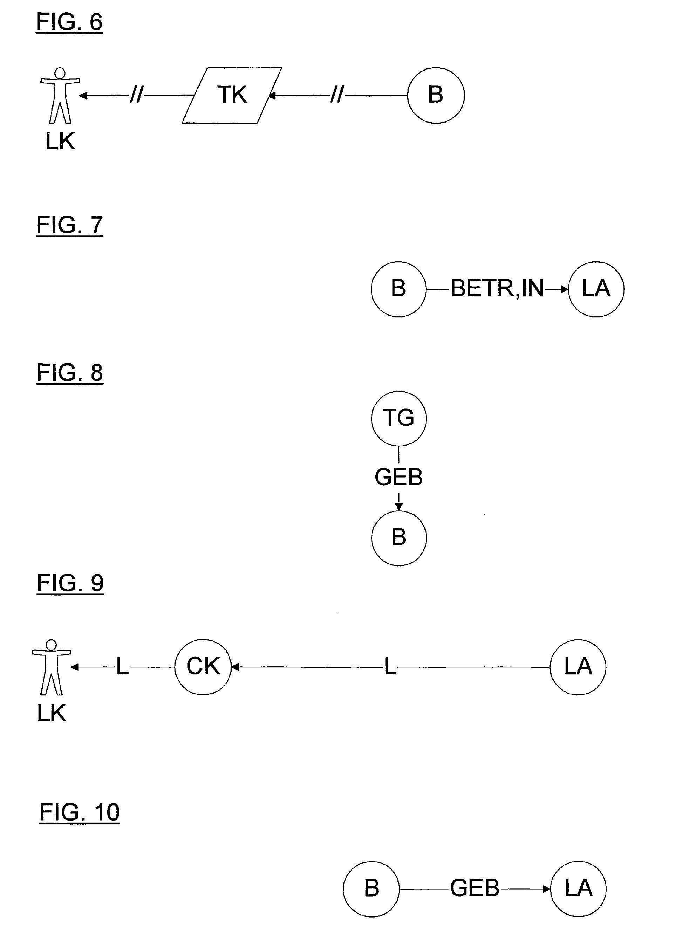

Die Fig. 1-10 zeigen den schrittweisen Ablauf des erfindungsgemäßen Verfahrens am Beispiel einer von einem Server herunterzuladenden Datei.
Fig. 1: Der Leistungskonsument(LK) nimmt mit seinem Computer(CK) Kontakt zu dem Server des Leistungsanbieters (LA) auf. Dort findet er verschiedene Leistungsangebote, z. B. eine Datei, die er laden möchte. Der Leistungskonsument wählt die von ihm gewünschte Leistung(L) aus.
Fig. 2 : Die Identifikationsnummer(IN) und die Rufnummer(T2) des Bezahlsystems (B) werden für den Leistungskonsumenten(LK) sichtbar angezeigt. Der Leistungskonsumenten wird aufgefordert, das Bezahlsystem(B) anzuwählen.
Fig. 3: Der Leistungskonsument(LK) wählt über einen Telefonanschluss (TK) das Bezahlsystem(B) mittels der Telefonnummer (T2) an. Dort gibt er die Identifikationsnummer (IN) ein.
Fig. 4: Das Bezahlsystem(B) überprüft die Identifikationsnummer (IN) und ermittelt den zu verrechnenden Betrag(BETR) vom Server des Leistungsanbieter (LA). Das Bezahlsystem berechnet eine Anrufdauer, die dem vom Leistungsanbieter geforderten Betrag entspricht. Der Leistungskonsument(LK) ist währenddessen mit seinem Telefonanschluss(TK) mit dem Bezahlsystem(B) verbunden und hört zum Beispiel Wartemusik(WM).
Fig. 5: Das Bezahlsystem(B) informiert den Leistungskonsumenten(LK) über die Höhe des zu verrechnenden Betrages(HB) und die Gesamtdauer(D) des Anrufes.
Fig. 6: Das Bezahlsystem(B) trennt die Leitung mit dem Telefonanschluss(TK) nach Erreichen der zuvor berechneten Anrufdauer.
Fig. 7: Das Bezahlsystem(B) übermittelt den Betrag(BETR), der sich aus der Dauer des Anrufes und der Anruflänge ergibt, und die Identifikationsnummer an den Leistungsanbieter(LA) zurück.
Fig. 8: Die ihm für diesen Anruf in Rechnung gestellten Gebühren(GEB) werden von der Telekommunikationsgesellschaft(TG) abzüglich einer Servicegebühr dem Inhaber des Bezahlsystems gutgeschrieben.
Fig. 9: Der Leistungsanbieter(LA) erbringt abhängig von der Rückmeldung von Fig. 6 die Leistung.
Fig. 10: Der Leistungsanbieter(LA) erhält vom Betreiber des Bezahlsystems(B) eine Gutschrift über die für diesen Anruf in Rechnung gestellten Gebühren(GEB) abzüglich einer Servicegebühr.

## Patentansprüche

1. Verfahren für bargeldloses Bezahlen in Computernetzwerken über Telefon, wobei der Benutzer als Leistungskonsument eine Identifikationsnummer von einem Leistungsanbieter erhält, sich durch das Wählen einer Telefonnummer mit dem Bezahlsystem verbindet, und sich mit Hilfe der Identifikationsnummer mittels Telefon gegenüber dem Bezahlsystem autorisiert, **dadurch gekennzeichnet dass**
- das Bezahlsystem die Höhe des zu bezahlenden Betrages ermittelt,
- das Bezahlsystem die verbleibende Anrufdauer berechnet, indem es die Gesamtdauer des Anrufes anhand der Kosten der Leitung und des einzufordernden Betrages berechnet und die bereits entstandenen Kosten, die sich aus der bisherigen Anrufdauer ergeben, in Abzug bringt,
- die Leitung nach dem Erreichen der zuvor berechneten Gesamtdauer vom Bezahlsystem getrennt wird,
- der Leistungsanbieter vom Bezahlsystem den Gesamtbetrag des Anrufes und die Identifikationsnummer übermittelt bekommt.

2. Verfahren nach Anspruch 1, **dadurch gekennzeichnet, dass** der zu verrechnende Betrag von dem Leistungsanbieter durch das Bezahlsystem angefordert wird.

3. Verfahren nach Anspruch 1, **dadurch gekennzeichnet, dass** der zu verrechnende Betrag vom Leistungskonsumenten in das Bezahlsystem eingegeben wird.

4. Verfahren nach einem der Ansprüche 1 oder 2 oder 3, **dadurch gekennzeichnet, dass** die Datenübertragung zwischen Bezahlsystem und Leistungsanbieter verschlüsselt erfolgt.

5. Verfahren nach einem der Ansprüche 1 bis 4, **dadurch gekennzeichnet, dass** die Identifikationsnummer nur einmal vergeben wird und nicht wieder verwendet wird.

6. Verfahren nach einem der Ansprüche 1 bis 4, **dadurch gekennzeichnet, dass** die Identifikationsnummer einmal vergeben wird und nach erfolgter Leistungserbringung wieder vergeben werden kann.

7. Verfahren nach einem der Ansprüche 1 bis 6, **dadurch gekennzeichnet, dass** die tatsächliche Höhe des verrechneten Betrages an den Leistungsanbieter übermittelt wird und dass **dadurch** Teilverrechnungen möglich gemacht werden.

8. Verfahren nach einem der Ansprüche 1 bis 7, **dadurch gekennzeichnet, dass** die Eingaben, die vom Leistungskonsumenten durchgeführt werden müssen, mittels Tastatur oder Stimmerkennung erfolgen können.

9. Verfahren nach einem der Ansprüche 1 bis 8, **dadurch gekennzeichnet, dass** die Übertragung der Identifikationsnummer, die vom Leistungsanbieter zum Leistungskonsumenten durchgeführt wird, über Computernetze, sonstige elektronische Netze, oder auf anderen Wegen, zum Beispiel fernmündlich, über Fax oder schriftlich erfolgen kann.

## Claims

1. Method for conducting cashless payment in computer networks via telephone, in which the user as consumer receives an identification number from a provider, connects himself with the payment system by dialling a telephone number, and authorizes himself with the help of the identification number via telephone towards the payment system, wherein
- the payment system determines the amount to be paid,
- the payment system calculates the remaining call duration by calculating the total call duration on the basis of the costs of the line and the amount to be demanded, and deducts the already resulting costs from the previous call duration,
- the line is cut from the payment system after the calculated total duration has been achieved,
- the payment system conveys the total amount of the call and the identification number to the provider

2. Method according to claim 1, wherein the amount to be credited is demanded from the provider by the payment system.

3. Method according to claim 1, wherein the amount to be credited is entered into the payment system by the consumer.

4. Method according to claim 1 or 2 or 3, wherein the data transmission between payment system and provider is carried out in code.

5. Method according to any one of the claims 1 to 4, wherein the identification number is allocated only once and not used again.

6. Method according to any one of the claims 1 to 4, wherein the identification number is allocated only once and can be allocated again after performance took place.

7. Method according to any one of the claims 1 to 6, wherein the actual amount to be credited is transmitted to the provider, which makes partial payment possible.

8. Method according to any one of the claims 1 to 7, wherein the data entry, which has to be done by the consumer, can be carried out via keyboard or voice recognition.

9. Method according to any one of the claims 1 to 8, wherein the transmission of the identification number, which is carried out by the provider to the consumer, can be done via computer networks, other electronic networks or in a different way, for example by telephone, by fax or in written form.

## Revendications

1. Une procédure pour paiements sans liquide par téléphone dans des réseaux informatiques ou l"utilisateur, qui est également le consommateur recoit de la part du prestataire de service un code d'identification, se connecte avec le système de paiement en composant un numéro téléphonique et s'autorise en saisissant le code d'identification par son clavier dont les points caractéristiques sont
- que le système de paiement trouve lui-même le montant à payer
- que le système de paiement calcule lui-même la durée de l'appel nécessaire, en calculant la durée totale compte tenant des coûts à la minute de la ligne et le montant à payer en déduisant les coûts déjà occasionnés, dû à la durée de l'appel déjà échue
- que le système de paiement termine lui-même l'appel en coupant la ligne, une fois que la durée totale calculé est échue.
- que le prestataire de service recoit un message du système de paiement en indiquant le montant global encaisser par cet appel ainsi que le numéro d'identification correspondant.

2. Procédure selon revendication n° 1, qui se **caractérise par le fait, que** le montant à payer est réclamer par le système de paiement du prestataire de service

3. Procédure selon revendication n° 1, qui se **caractérise par le fait, que** le montant à payer est transmis par le consommateur au système de paiement à l'aide de son clavier.

4. Procédure selon un des revendications n° 1 ou 2 ou 3 qui se **caractérise par le fait, que** la transmission des donnés se fait de manière chiffrée.

5. Procédure selon un des revendicationes n° 1 à 4 qui se **caractérise par le fait, que** le code d'identification n'est attribué qu'une seule fois et qu'il ne sera pas réutiliser.

6. Procédure selon un des revendications n° 1 à 4 qui se **caractérise par le fait, que** le code d"identificatio est attribué une fois et qu'il se peut qu'il sera réutiliser une fois que la transaction soit terminé.

7. Procédure selon un des revendications n° 1 à 6 qui se **caractérise par le fait, que** le montant effectif encaissé et transmis au prestataire de service et qu'ainsi également des compensations partielles peuvent être faites.

8. Procédure selon un des revendications n° 1 à 7 qui se **caractérise par le fait, que** les entrées se font par le consommateur, soit par le clavier soit par reconnaissance de voix.

9. Procédure selon un des revendications n° 1 à 8 qui se **caractérise par le fait, que** la transmission du code d'identification du prestataire de service vers le consommateur, peut se faire soit par des réseaux informatiques, soit par autres réseaux électroniques soit par autres moyens, par exemple par téléphone, par fax ou par voie écrite.
